# EUROPÄISCHE PATENTANMELDUNG

(11) **EP 1 892 422 A1**
(43) Veröffentlichungstag der Anmeldung: **27.02.2008**
(21) Anmeldenummer: 06017820.9
(22) Anmeldetag: 25.08.2006
(51) Int. Cl.: F04D 29/62, F04D 29/54, F04D 29/56, F01D 5/00

(54) **Verdichterleitschauffel für einen Verdichter und Verfahren zum Wiederherstellen eines Verdichters**

(71) Anmelder: SIEMENS AKTIENGESELLSCHAFT, 80333 München (DE)
(72) Erfinder: Trenaman, Dirk, 47506 Neukirchen-Vluyn (DE); Vosberg, Volker Dr., 45476 Mülheim an der Ruhr (DE)

(57) **Zusammenfassung**

Die Erfindung betrifft eine Verdichterleitschaufel (18) für einen Verdichter (10), insbesondere für einen Verdichter (10) einer stationären Gasturbine (12), mit einer Schaufelhauptachse (20), entlang derer ein Fußbereich (24) zum Montieren der Verdichterleitschaufel (18) in einem gehäuseseitigem Schaufelträger (28), ein daran angeordnetes Tragflügelprofil (31) mit einer Saugseitenwand (62) und einer Druckseitenwand (64) und ein Kopfbereich (34) vorgesehen ist. Des Weiteren betrifft die Erfindung die Reparatur eines Verdichters (10). Um die Verfügbarkeit des Verdichters (10) zu erhöhen, wird vorgeschlagen, verschlissene Leitschaufeln (18) oder die Leitschaufeln (18), deren Lager verschlissen sind, bei geschlossenem Gehäuse (42) des Verdichters (10) auszubauen und durch eine modulare Verdichterleitschaufel (18) zu ersetzen. Hierzu sind mehrere Ausgestaltungen von modularen Verdichterleitschaufel (18) angegeben.

## Beschreibung

Die Erfindung betrifft eine Verdichterleitschaufel für einen Verdichter, insbesondere für einen Verdichter einer stationären Gasturbine, mit einer Schaufelhauptachse, entlang derer ein Fußbereich zum Montieren der Verdichterleitschaufel in einem gehäuseseitigen Schaufelträger, ein daran angeordnetes Tragflügelprofil mit einer Saugseitenwand und einer Druckseitenwand und ein Kopfbereich vorgesehen ist. Des Weiteren betrifft die Erfindung ein Verfahren zum Wiederherstellen eines Verdichters, bei dem bei ungeöffnetem Gehäuse eine auszutauschende Verdichterleitschaufel zu ersetzen oder die Lagerung einer Verdichterleitschaufel wiederherzustellen ist.

Gasturbinen und Verdichter sind allgemein bekannt. Der Verdichter, auch der einer Gasturbine, kann eine oder mehrere Leitschaufelreihen aufweisen, deren Tragflügelprofile unter Einstellung unterschiedlicher Staffelungswinkel um eine Schaufelhauptachse, welche meist mit dem Radius des Verdichters zusammenfällt, drehbar sind. Diese zumeist im vorderen Bereich, d.h. im ansaugseitigen Bereich des Verdichters vorgesehenen verstellbaren Verdichterleitschaufeln können nach einer gewissen Betriebsdauer verschleißen. Der Verschleiß betrifft insbesondere die im Fußbereich und im Kopfbereich der Verdichterleitschaufel angeordneten, zur Drehung notwendigen Zapfen sowie die zur Aufnahme der Zapfen in einem gehäuseseitigen Schaufelträger angeordneten Lagerbuchsen oder in einem rotorseitigen Befestigungsring angeordneten Bohrungen. Dieser Verschleiß kann im schlimmsten Fall zum Festsetzen einer verstellbaren Verdichterleitschaufel führen, so dass der Verdichter oder die Gasturbine zur Reparatur still gesetzt werden muss.

Zur Reparatur der verschlissenen Bauteile nach heutigem Stand der Technik muss der Verdichter bzw. die Gasturbine aufgedeckt werden, um Zugang zu den auszutauschenden Bauteilen zu erhalten. Je nach betroffener Position innerhalb des Leitschaufelkranzes muss im schlimmsten Fall sogar der Rotor entnommen werden, wenn ein Defekt in der unteren Gehäusehälfte aufgetreten ist. Die Zerlegung des Verdichters bzw. der Gasturbine ist dabei vergleichsweise zeitintensiv und reduziert deren Verfügbarkeit signifikant. Eine Reparatur im geschlossenen Zustand der stationären Strömungsmaschine ist derzeit nicht möglich.

Aufgabe der vorliegenden Erfindung ist daher die Bereitstellung einer Verdichterleitschaufel und die Angabe eines Verfahrens zum Wiederherstellen eines Verdichters, durch die die Verfügbarkeit des Verdichters und einer ggf. damit ausgestatteten Gasturbine erhöht wird.

Die auf eine gattungsgemäße Verdichterleitschaufel gerichtete Aufgabe wird gelöst, indem diese den Merkmalen des Anspruchs 1 entspricht. Weiter wird zur Lösung der auf das Verfahren gerichteten Aufgabe vorgeschlagen, die Herstellungsschritte des Anspruchs 14 durchzuführen und vorzugsweise dabei eine erfindungsgemäße Verdichterleitschaufel nach einem der Ansprüche 1 bis 13 zu verwenden.

Die Erfindung geht von der Erkenntnis aus, dass defekte Verdichterleitschaufeln bzw. das defekte Lager von Verdichterleitschaufeln auch ohne das Abheben des Gehäuses repariert werden können, sofern die Verdichterleitschaufel vom Wartungspersonal durch den Ansaugkanal des Verdichters erreicht werden kann. Dies gilt insbesondere für die Verdichterleitschaufeln der ersten, d.h. ansaugseitigen Leitschaufelreihe des Verdichters, welche auch als Einlassleitschaufeln ("Inlet-Guide-Vanes" oder kurz "IGVs") bezeichnet werden. Der Monteur hat von einem dem Verdichtereingang vorgeschalteten Ansaughaus aus Zugriff auf diese IGVs. Im ersten Fertigungsschritt ist es erforderlich, die betreffende Verdichterleitschaufel zu zerteilen, damit diese anschließend radial aus ihrer Lagerung entnommen werden kann. Anschließend können die verbliebenen Teile der Verdichterleitschaufel durch den Ansaugkanal, also durch das Ansaughaus des Verdichters entnommen werden. Danach erfolgt die Montage von mindestens zwei Modulen an die Positionen der entnommenen Verdichterleitschaufel, wobei die Module im zusammengesetzten Zustand eine Verdichterleitschaufel bilden. Nach der Montage der Module der Verdichterleitschaufel werden diese dauerhaft miteinander verbunden, so dass die verschlissene Verdichterleitschaufel durch eine neue, modulare Verdichterleitschaufel ersetzt worden ist. Als einzubauende Verdichterleitschaufel, die auch als Reparatur-Verdichterleitschaufel bezeichnet wird, findet eine, in den Vorrichtungsansprüchen beschriebene Verdichterleitschaufel Verwendung.

Zur Ausführung der Erfindung ist eine aus mindestens zwei Modulen herstellbare Verdichterleitschaufel erforderlich, die innerhalb des Strömungskanals in ihrer Betriebsposition zusammensetzbar ist und deren Module dort dauerhaft verbindbar sind.

Ein Aufdecken des stationären Verdichters, bzw. der stationären Gasturbine, indem die obere Gehäusehälfte vollständig abgehoben wird, kann somit entfallen. Sollte der Defekt in der unteren Hälfte des Verdichters auftreten, entfällt sogar auch die Entnahme des Rotors. Dies reduziert die Dauer des Wiederherstellungsprozesses wesentlich, was sich besonders vorteilhaft auf die Verfügbarkeit des Verdichters bzw. der Gasturbine und auf die Reparaturkosten auswirkt.

Vorteilhafte Ausgestaltungen sind in den Unteransprüchen angegeben.

Gemäß einer ersten Weiterbildung der Erfindung umfasst ein erstes Modul den Fußbereich und einen Teil des Tragflügelprofils und ein zweites Modul einen weiteren Teil des Tragflügelprofils und den Kopfbereich der Verdichterleitschaufel. Die zur Reparatur des Verdichters innerhalb dessen zusammenzusetzende Verdichterleitschaufel umfasst somit ein radial weiter außen, d.h. gehäuseseitig zu befestigendes Modul und ein radial weiter innen, d.h. rotorseitig zu montierendes Modul, welche nacheinander separat montiert werden können.

Es hat sich als besonders vorteilhaft herausgestellt, wenn die mindestens zwei Module einen Verbindungsbereich aufweisen, der sich im Wesentlichen entlang einer Profilmittenlinie des Tragflügelprofils erstreckt. Folglich kann das erste Modul im Wesentlichen die Druckseitenwand des Tragflügelprofils umfassen und das zweite Modul im Wesentlichen die Saugseitenwand des Tragflügelprofils. Die umgekehrte Kombination von Modul und Seitenwand ist auch möglich. Eine sichere Verbindung kann zusätzlich angegeben werden, bei der die Module formschlüssig miteinander verbindbar sind. Dies trägt sowohl zur weiteren Festigkeit und Steifigkeit der Verdichterleitschaufel als auch des zugehörigen Tragflügelprofils bei.

Eine besonders genaue Betriebslage der Verdichterleitschaufel kann erreicht werden, wenn zur Einstellung der Höhe des Tragflügelprofils in Richtung der Schaufelhauptachse zwischen den beiden Modulen ein oder mehrere Passstücke als weitere Module einsetzbar sind. Generell werden die Module nacheinander montiert. Dabei wird der Kopf- bzw. Fußbereich jedes Moduls durch eine in Radialrichtung des Verdichters verlaufende Bewegung des Moduls in die vorgesehene Halterung eingesetzt. Damit jedoch das Tragflächenprofil des ersten Moduls den Einbau des zweiten Moduls nicht behindert, ist eines der beiden Tragflügelteile in der vorgeschlagenen Ausgestaltung der Module kürzer als es zur Bildung des vollständigen Tragflügelprofils erforderlich ist. Nach der Montage des zweiten Moduls können dann die Passstücke in den zur Montage des zweiten Moduls benötigen Freiraum, welcher im Bereich des Tragflügelprofils liegt, eingesetzt werden, um das Tragflügelprofil zu vervollständigen. Eine einfache Montage kann somit gewährleistet werden.

In einer alternativen Ausgestaltung der Erfindung weisen die mindestens zwei Module einen Verbindungsbereich auf, der sich im Wesentlichen schräg zur Schaufelhauptachse erstreckt. Dementsprechend kann eines der beiden Module im Wesentlichen die Anströmkante des Tragflügelprofils aufweisen und das andere der beiden Module im Wesentlichen die Hinterkante des Tragflügelprofils. Auch bei dieser Ausgestaltung können Passstücke zur Vervollständigung des Tragflächenprofils vorgesehen sein.

In einer dritten Ausgestaltung der Erfindung sind die beiden Teile des Tragflügelprofils der mindestens zwei Module lediglich als Kernelement ausgebildet, welche Kernelemente von mindestens zwei Schalenelementen teilweise umgreifbar sind. Die Schalenelemente bilden dann das aerodynamisch wirksame Tragflügelprofil. Sofern die Schalenelemente lediglich einen Teil des Tragflügelprofils umfassen, wird der Rest des Tragflügelprofils von den Modulen gebildet. Auf jeden Fall geben die an jedem Modul vorgesehenen stummelartigen Kernelemente die Drehung des Kopfbereiches an die Schalenelemente weiter. Mit Hilfe der Schalenelemente kann zudem der Abstand zwischen den beiden Modulen eingestellt werden, um eine optimale Lagerung der Kopf- und Fußbereiche in den Bohrungen oder Lagerschalen zu erhalten. Es kann somit eine besonders einfach zu montierende Verdichterleitschaufel angegeben werden, welche insgesamt vier Module aufweist: ein erstes und zweites Modul mit fußseitigem bzw. kopfseitigem Befestigungsbereich und mit je einem stummelartigen Kernelement sowie die beiden Schalenelemente, welche das aerodynamisch wirksame Tragflügelprofil bilden.

Um eine besonders dauerhafte und feste Verbindung der Module zu erreichen, können die Module miteinander oder die Schalenelemente miteinander oder die Schalenelemente mit den Modulen mittels Epoxydharz verklebt sein. Auch eine weitere Verstärkung der Verbindung mit einem Kohlefaserverbundwerkstoff (CFK) ist denkbar. Alternativ zu dem Klebeverfahren zum Verbinden der Module kann es möglich sein, sofern die Module aus einem entsprechenden Material bestehen, auch ein Schweißverfahren zum Verbinden anzuwenden.

Zur weiteren Steigerung der Festigkeit der Verdichterleitschaufel können die Module im Bereich des Tragflügelprofils und/oder die Schalenelemente von einer Bandage zumindest teilweise, aber umlaufend umschlossen sein. Vorzugsweise kann mindestens eines der Module, mindestens eines der Schalenelemente und/oder die Bandage aus einem Kohlefaserverbundwerkstoff (CFK) bestehen. Die Bandage kann beispielsweise aus Schichten von Kohlefasern gebildet werden, wobei diese zudem zur besonders einfachen Einstellung der aerodynamischen Form des Tragflügelprofils gezielt aufgebracht werden können.

Um eine besonders robuste Verdichterleitschaufel anzugeben, welche gegen Fremdkörperschaden (Foreign Object Damage, FOD) und/oder Erosion besonders widerstandsfähig ist, wird vorgeschlagen, dass das Modul oder das Schalenelement, welches eine Anströmkante und einen Großteil der Druckseitenwand des Tragflügelprofils umfasst, aus Metall besteht. Metall ist besonders bei einem Fremdkörperschaden von Vorteil, da bei einem solchen Schaden das Herauslösen von Bruchstücken aufgrund der Materialeigenschaften von Metall vermieden wird.

Da die Erfindung sich im Wesentlichen auf eine Verdichterleitschaufel bezieht, die um ihre Schaufelhauptachse drehbar lagerbar ist, weist diese in ihrem Fußbereich und/oder in ihrem Kopfbereich jeweils einen beispielsweise zylindrischen Zapfen auf, der in eine im gehäuseseitigen Schaufelträger angeordnete oder der in eine im rotorseitigen Befestigungsring angeordnete Lagerbuchse einsteckbar ist. Die Mittelpunkte beider Zapfen liegen dabei auf der Schaufelhauptachse, um die Drehbarkeit der zusammengesetzten Module zu gewährleisten.

Um eine aerodynamisch besonders effiziente Kontur des Tragflügelprofils zu erhalten, kann nach der Herstellung der Verdichterleitschaufel die Kontur des Tragflügelprofils kontrolliert und bei Bedarf mittels lokalem Beschleifen korrigiert werden.

Durch das angegebene Verfahren ist es auch möglich, die zur Lagerung der Verdichterleitschaufel benötigten gehäuseseitigen und/oder rotorseitigen Bauteile, insbesondere die Lagerbuchsen auszutauschen, nachdem die betreffende Verdichterleitschaufel entnommen worden ist. Darüber hinaus kann auch der Sitz der gehäuseseitigen oder rotorseitigen Bauteile nach der Entnahme der auszutauschenden Bauteile nachgearbeitet werden. Dies ist immer besonders dann erforderlich, wenn der Sitz der zur Lagerung der Verdichterleitschaufel nötigen Lagerbuchse verschlissen ist. Auch für diesen Anwendungsfall entfällt das zeitintensive Zerlegen des Verdichters bzw. Gasturbine.

In einem besonders vorteilhaften Verfahren wird die aus den Modulen zusammengesetzte Verdichterleitschaufel bei der nächsten planmäßigen Zerlegung des Verdichters durch eine einstückige langlebigere Verdichterleitschaufel ersetzt. Dieser Verfahrensschritt bietet sich insbesondere dann an, wenn die Reparatur-Verdichterleitschaufel gegenüber der ersetzten Verdichterleitschaufel, eine geringere, aber bis zum Erreichen der nächsten, planmäßigen Zerlegung der Strömungsmaschine ausreichende Lebensdauer aufweist. Die Reparatur-Verdichterleitschaufel ersetzt dann nur zwischenzeitlich die verschlissene Verdichterleitschaufel. Die Reparatur-Verdichterleitschaufel ist demnach eine Zwischenlösung, die aus einem preisgünstigeren Material gefertigt werden kann. Dies spart weitere Reparaturkosten.

Bevorzugtermaßen wird zum Durchführen des Verfahrens zum Wiederherstellen des Verdichters eine Verdichterleitschaufel eingesetzt, die nach den vorgenannten Merkmalen ausgestaltet ist.

Die Erfindung wird anhand einer Zeichnung erläutert, aus der weitere Merkmale sowie Vorteile hervorgehen. Es zeigen:
- FIG 1: einen Längsschnitt durch den ansaugseitigen Abschnitt eines Axialverdichters mit einer um ihre Schaufelhauptachse drehbar gelagerten Verdichterleitschaufel,
- FIG 2: die Draufsicht auf eine erfindungsgemäße modulare Verdichterleitschaufel,
- FIG 3: den Längsschnitt durch die in FIG 2 dargestellte modulare Verdichterleitschaufel,
- FIG 4: den Querschnitt durch die Verdichterleitschaufel gemäß FIG 2,
- FIG 5-7, 8-10: zeigen jeweils eine alternative Ausgestaltung einer erfindungsgemäßen Verdichterleitschaufel in den in FIG 2, FIG 3 und FIG 4 beschrieben Ansichten,
- FIG 11: zeigt eine weitere alternative Ausgestaltung mit zwei Schalenelementen und
- FIG 12: zeigt ein Ausführungsbeispiel einer aus zwei Modulen formschlüssig zusammengesetzten Verdichterleitschaufel.

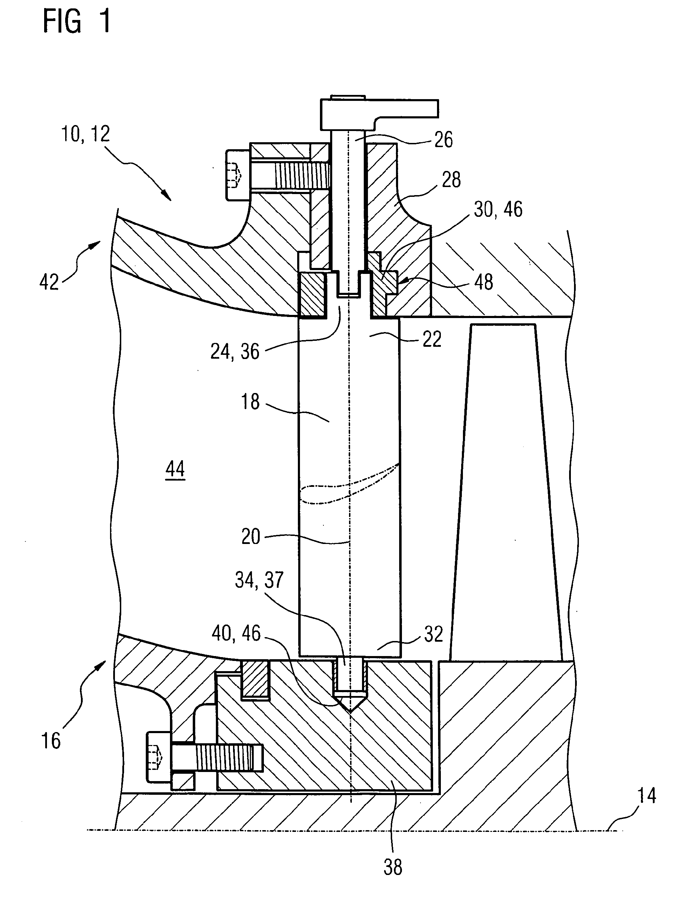

FIG 1 zeigt den Längsschnitt durch den eingangsseitigen Bereich eines Verdichters 10 einer Gasturbine 12, welche als stationäre Gasturbine zur Erzeugung von mechanischer oder elektrischer Energie Anwendung findet. Die Gasturbine 12 erstreckt sich entlang einer Maschinenachse 14 und weist aufeinander folgend den Verdichter 10, eine nicht näher dargestellte Brennkammer sowie eine ebenfalls nicht dargestellte Turbine auf.

Im eingangsseitigen, d.h. ansaugseitigen Ende 16 des Verdichters 10 sind zur Einstellung des die Gasturbine 12 durchströmenden Massenstromes verstellbare Verdichterleitschaufeln 18, so genannte "Inlet Guide Vanes" kranzförmig um die Maschinenachse 14 angeordnet. Die Verdichterleitschaufeln 18 weisen jeweils eine Schaufelhauptachse 20 auf, welche im dargestellten Fall mit dem Radius der Gasturbine 12 zusammenfällt. Alternativ dazu kann die Schaufelhauptachse 20 auch geringfügig von der Radialrichtung der Gasturbine 12 abweichen. Der die Gasturbine 12 durchströmende Massenstrom kann in Abhängigkeit von den Verdrehwinkeln der im Querschnitt profilierten Verdichterleitschaufeln 18 eingestellt werden. Hierzu sind die Verdichterleitschaufeln 18 um ihre jeweilige Schaufelhauptachse 20 drehbar, wobei sich die Staffelungswinkel aller Verdichterleitschaufeln 18 des Schaufelkranzes synchron ändern.

Die Verdichterleitschaufel 18 weist an ihrem radial äußeren Ende 22 einen Fußbereich 24 auf, der einen ersten Zapfen 36 zur drehbaren Lagerung und zur Aufnahme eines Stellantriebs 26 umfasst. Der Stellantrieb 26 dient zur Einstellung des Staffelungswinkels. Der erste Zapfen 36 ist in einem gehäuseseitigen Schaufelträger 28 innerhalb einer Lagerbuchse 30 drehgelagert und über eine Nut-und-Feder-Verbindung an den Stellantrieb 26 angekoppelt.

Am radial inneren Ende 32 weist die Verdichterleitschaufel 18 einen Kopfbereich 34 auf, welcher einen weiteren Zapfen 37 umfasst. Der weitere Zapfen 37 liegt in einem rotorseitigen, fest stehenden Befestigungsring 38 drehgelagert an.

Ein sich betriebsbedingt einstellender Verschleiß im Fußbereich 24, im Kopfbereich 34 der Verdichterleitschaufel 18 und/oder an der Lagerbuchse 30 bzw. an einer Bohrung 40 können einen Tausch der Verdichterleitschaufel 18 bzw. der Lagerbuchse 30 oder auch ein Nacharbeiten deren Sitze erforderlich machen. Bisher war es hierzu nötig, die obere Gehäusehälften 42 von der unteren, nicht dargestellten Gehäusehälfte abzuheben, so dass die Verdichterleitschaufel 18 radial nach außen aus der Bohrung 40 entnommen werden konnte.

Mit der Erfindung ist nun ein neues Verfahren zum Wiederherstellen des Verdichters 10 bei verschlissener Verdichterleitschaufel 18 (bzw. bei verschlissener Lagerung) auch ohne das Herunternehmen der oberen Gehäusehälfte 42 durchführbar. Hierzu ist in einem ersten Arbeitsschritt die betreffende Verdichterleitschaufel 18 im Strömungskanal 44 des Verdichters 10 so zu zerteilen, dass die verbleibenden Teile durch radiales Bewegen, d.h. das äußere Teil radial nach innen und das innere Teil nach radial außen, aus der Zapfenlagerung herausnehmbar sind. Anschließend werden diese Teile durch einen Ansaugkanal 44 des Verdichters 10 abtransportiert.

Sofern erforderlich, kann nach dem Entnehmen der Verdichterleitschaufel 18 die zur Lagerung der Verdichterleitschaufel 18 nötigen gehäuseseitigen und/oder rotorseitigen Bauteile 46, insbesondere die Lagerbuchse 30 ausgetauscht werden. Des Weiteren kann auch nach der Entnahme der auszutauschenden Bauteile 46 auch deren Sitz 48 oder die Bohrung 40 nachgearbeitet werden. In diesem Fall ist aufgrund des nun vergrößerten frei werdenden Bauraums anstelle einer Ersatzbuchse 30 eine neuartige Lagerbuchse in einer so genannten Übergröße zu verwenden.

Anschließend erfolgt die Montage von den die Verdichterleitschaufel 18 bildenden Modulen an der Position der entnommenen Verdichterleitschaufel 18. Hierzu werden die Module einzeln nacheinander in den Strömungskanal des Verdichters 10 eingebracht und anschließend radial nach außen bzw. radial nach innen in die dafür entsprechend vorgesehenen Aufnahme, Lagerung bzw. Bohrung eingeschoben. Nachdem die einzelnen Module der Verdichterleitschaufel 18 montiert worden sind, werden diese dauerhaft verbunden, wonach die Reparatur des Verdichters 10 abgeschlossen sein kann.

Je nach angewendetem Verbindungsverfahren und je nach Ausführungsform der modularen Verdichterleitschaufel 18 kann es weiterhin erforderlich sein, im Anschluss an die Verbindungsherstellung die aerodynamische Kontur des Tragflügelprofils 31 zu kontrollieren und diese bei Bedarf, insbesondere mittels lokalem Beschleifen, zu korrigieren. Dies dient zur Vermeidung von aerodynamischen Verlusten beim Betrieb der Strömungsmaschine.

Da die Montage der Verdichterleitschaufel 18 bei geschlossenem Gehäuse 42 des Verdichters 10 erfolgt, muss die Verdichterleitschaufel 18 sich aus mehreren Modulen zusammensetzen. Mögliche Konstruktionen einer modularen Verdichterschaufel 18 werden in den nachfolgenden Figuren detailliert beschrieben. Die modulare Verdichterleitschaufel 18 wird dabei auch als Reparaturschaufel bezeichnet.

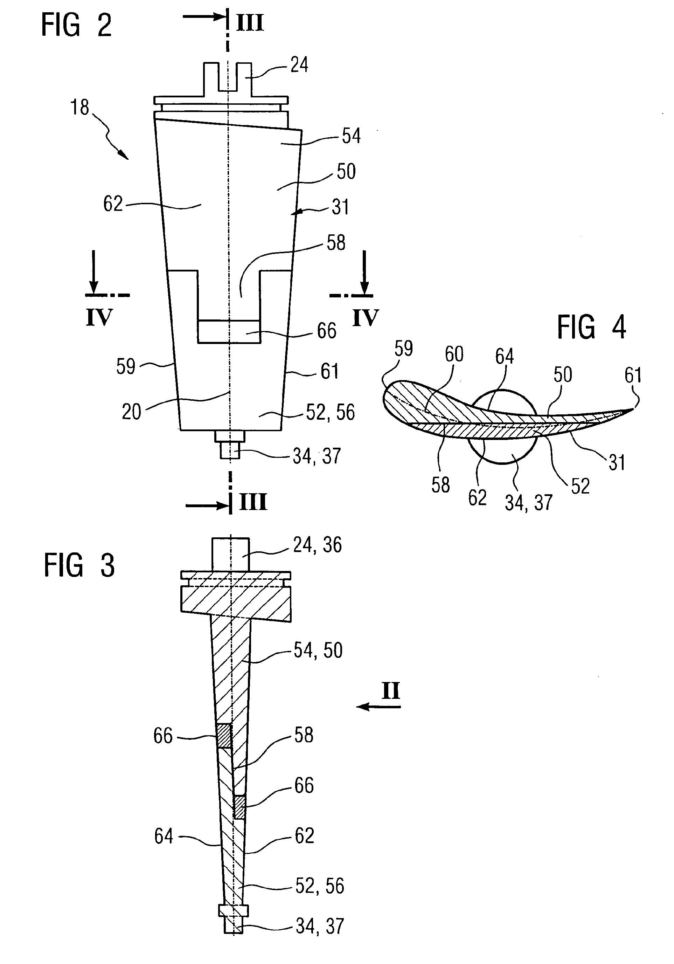

In einer ersten Ausgestaltung gemäß FIG 2 bis FIG 4 besteht die Verdichterleitschaufel 18 aus mindestens zwei Modulen 50, 52. Das erste Modul 50 umfasst den Fußbereich 24 und einen in der Betriebslage radial weiter außen liegenden Teil 54 des Tragflügelprofils 31. Das zweite Modul 52 umfasst dagegen einen in der Betriebslage radial weiter innen liegenden Teil 56 des Tragflügelprofils 31 und den Kopfbereich 34 der Verdichterleitschaufel 18. Wie aus der FIG 3 und FIG 4 in Verbindung mit FIG 2 ersichtlich ist, weisen die beiden Module 50, 52 einen Verbindungsbereich 58 auf, der sich im Wesentlichen entlang einer Profilmittenlinie 60 des Tragflügelprofils 31 erstreckt. Die Profilmittenlinie 60 erstreckt sich in der Regel von einer Anströmkante 59 des Tragflügelprofils 31 zu einer Abströmkante 61. Damit zur Montage des zweiten Moduls 52 nach der Montage des ersten Moduls 50 das bereits montierte, erste Modul 50 nicht hinderlich ist, sind die beiden Tragflügelteile 54, 56 gemeinsam - in Richtung der Schaufelhauptachse 20 gesehen - kürzer als die radiale Höhe der Strömungskanals im Bereich des IGVs. Der so bereitgestellte, im Bereich des Tragflügelprofils 31 angeordnete Freiraum kann zur Montage des zweiten Moduls 52 erforderlich sein. Der Freiraum ist - in Radialrichtung gesehen - mindestens so hoch wie der Zapfen 36, 37 desjenigen Moduls 50, 52, welches als zweites montiert wird.

Wie insbesondere aus FIG 3 hervorgeht, ist beispielsweise eine saugseitige Schaufelwand 62 des Tragflügelprofils 31 auf beide Module 50, 52 aufgeteilt. Zur besseren Montierbarkeit addieren sich die saugseitigen Höhen der Tragflügelteile 54, 56 jedoch nicht zur vollständigen, benötigten Höhe des fertig zusammengesetzten Tragflügelprofils 31. Gleiches gilt für die druckseitige Schaufelwand 64. Um die benötigte vollständige - in Radialrichtung gesehene - Höhe des Tragflügelprofils 31 zu erhalten, sind Passstücke 66 vorgesehen, die nach der Montage der ersten beiden Module 50, 52 an der noch fertigzustellenden Verdichterleitschaufel 18 im Freiraum zu befestigen sind. Hierdurch ist es auch möglich, in Abhängigkeit von unterschiedlichen - in Radialrichtung gesehen - großen Passstücken 66 die Höhe des Tragflügelprofils 31 auf die radiale Höhe des Strömungskanals anzupassen.

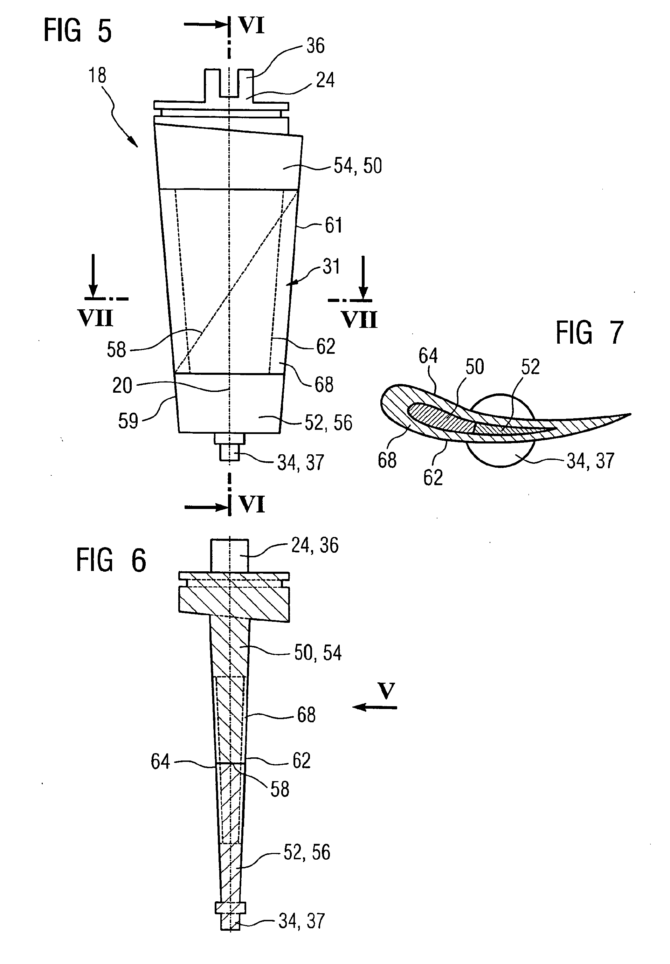

Das Verbinden der zur Bildung der Verdichterleitschaufel 18 beteiligten Komponenten, also der beiden Module 50, 52 sowie der Passstücke 66 kann mittels Kleben erfolgen. Hierzu kann als Klebstoff ein Epoxydharz verwandt werden. Um die Verbindung der Module 50, 52, 66 gegen Lösen zu sichern, kann um das Tragflügelprofil 31 umlaufend herum im Bereich der Verbindung 58 eine Bandage (vgl. FIG 6) die beiden Module 50, 52 und die Passstücke 66 umschließen. Hierdurch wird eine besonders steife Verdichterschaufel 18 erhalten, die den beim Betrieb auftretenden Belastungen, zumindest bis zum nächsten planmäßigen Zerlegung des Verdichters 10 standhalten kann. Dann kann die Reparaturschaufel durch eine einstückige, massive Verdichterleitschaufel 18 ersetzt werden.

Alternativ zu der in FIG 2 bis FIG 4 dargestellten Verbindung können die einzelnen Module auch in der in FIG 5 bis FIG 7 dargestellten Art und Weise ausgebildet sein. Anstelle des aus FIG 2 bis FIG 4 dargestellten Verbindungsbereichs 58, welche entlang der Profilmittenlinie 60 verläuft, sind die Module 50, 52 der in FIG 5 bis FIG 7 dargestellten Verdichterleitschaufel 18, derart geteilt, dass der Verbindungsbereich 58 nun schräg zur Schaufelhauptachse 20 verläuft.

Des Weiteren zeigt die in FIG 5 und FIG 7 dargestellte Verdichterleitschaufel 18 die aus Kohlefaserverbundwerkstoff bestehende, ggf. geschichtete Bandage 68, welche die beiden Tragflügelteile 54, 56 der Module 50, 52 zur Vergrößerung der Stabilität der Verdichterleitschaufel 18 endlos umlaufend umschließt.

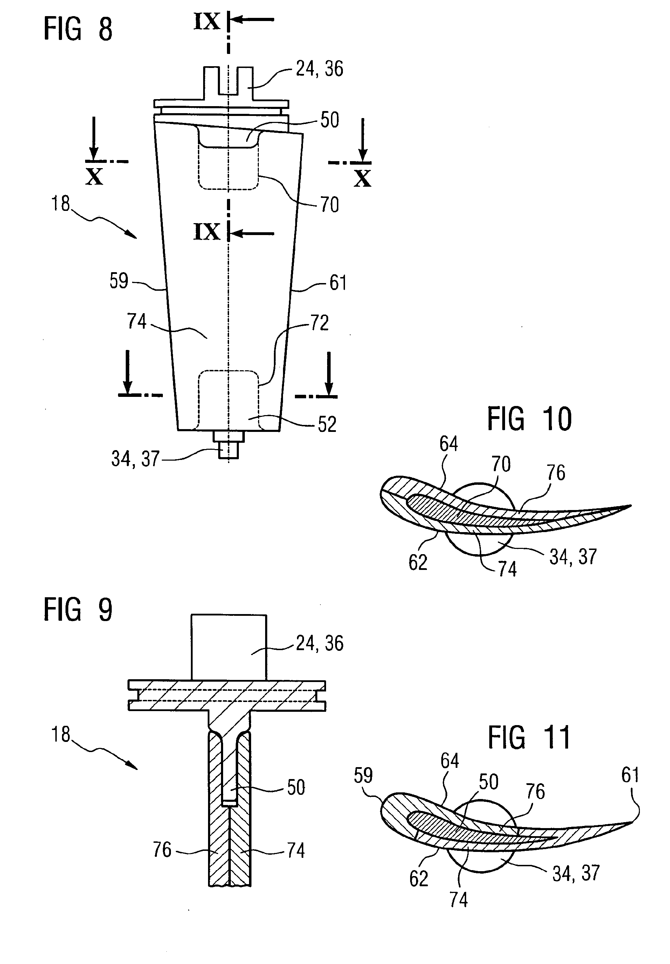

Eine dritte Ausgestaltung der erfindungsgemäßen Verdichterleitschaufel 18 ist in den Figuren 8 bis 11 dargestellt. Die beiden Module 50,52 weisen als Tragflügelteile 54, 56 des Tragflügelprofils 31 stummelartige Kernelemente 70, 72 auf. An diesen Kernelementen 70,72 werden zwei Schalenelemente 74,76 als weitere Module der Verdichterleitschaufel 18 angelagert, so dass die Kernelemente 70, 72 nicht oder nur geringfügig die äußere Kontur des Tragflügelprofils 31 bilden. Den Großteil der Schaufelwände 62, 64 wird von den Schalenelementen 72, 74 gebildet. Eines der beiden Schalenelemente 74 bildet dabei die saugseitige Schaufelwand 62, wohingegen das andere der beiden Schalenelement 76 die druckseitige Schaufelwand 64 formt. Hierzu zeigt FIG 10 den Querschnitt durch FIG 8 gemäß der angegebenen Schnittlinie und FIG 9 das fußseitige Detail durch eine gemäß FIG 8 ausgebildete Verdichterschaufel 18 in einem Längsschnitt.

Gemäß einer in FIG 11 dargestellten alternativen Aufteilung der Schalenelemente 74, 76 ist es auch möglich, dass beispielsweise eines der beiden Schalenelemente 76 die Anströmkante 59 des Tragflügelprofils 31, den Großteil der Druckseitenwand 64 und nur einen geringfügigen Teil der Saugseitenwand 62 umfasst. Im Gegenzug dazu bildet das andere der beiden Schalenelemente 74 die Abströmkante 61 des Tragflügelprofils 31 und die restlichen Teile der Druckseitenwand 64 und der Saugseitenwand 62. Sofern das druckseitig angeordnete, die vollständige Anströmkante 59 umfassende Schalenelement 76 aus Metall gefertigt ist, kann dieses besonders wirksam der Erosion standhalten, welche beim Betreiben des Verdichters 10 an dieser Stelle vermehrt auftreten kann. Auch einem "Foreign Object Damage", einem so genannten Fremdkörperschaden, kann diese erfindungsgemäße Verdichterleitschaufel 18 besonders effizient standhalten, ohne dass sich im Schadensfall Bruchstücke aus ihr herauslösen.

Auch die beiden letztbeschriebenen, in FIG 8 - 10 und in FIG 11 gezeigten Ausgestaltungen können zur verbesserten Verbindung der einzelnen Module 50, 52, 72, 74 mit einer umlaufenden Bandage 69 gemäß FIG 5 -7 ausgestattet sein.

Die Module 50, 52, 66, die Schalenelemente 74, 76 und/oder die das Tragflügelprofil 31 zumindest teilweise umgebende Bandage 68 können vorzugsweise aus einem Kohlefaserverbundwerkstoff bestehen, da diese Materialien besonders hohe Festigkeiten bei geringem Gewicht aufweisen und sich auch innerhalb des Verdichters 10 bei geringerem Bauraum miteinander verbinden lassen.

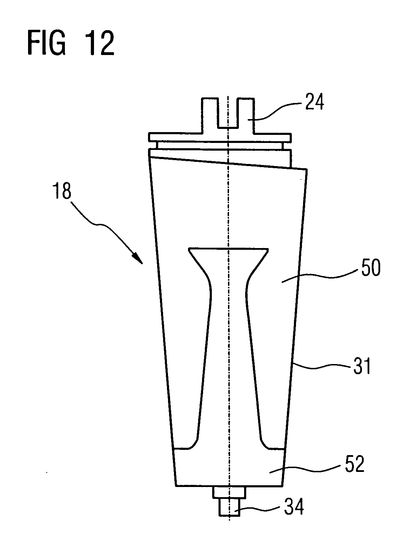

Ein viertes Ausführungsbeispiel zeigt in FIG 12 die schematische Darstellung einer formschlüssigen Verbindung zweier die Verdichterleitschaufel 18 bildenden Module 50, 52.

Insgesamt kann mit dem Verfahren und der vorgeschlagenen Verdichterleitschaufel ein Reparaturverfahren für defekte Verdichterleitschaufel bzw. für verschlissene Lagerungen von Verdichterleitschaufeln angegeben werden, bei denen das Einfügen der beiden an den Modulen angeordneten Zapfen in die zugehörigen Lagerbuchsen durch radiales in die Lagerbuchsen hineinbewegen gelingt, obwohl das Gehäuse des Verdichters nicht abgehoben wurde. Nach der Montage der einzelnen Module, werden die das Tragflügelprofil bildenden Profilteile fixiert und mit Epoxydharz verklebt bzw. mit Kohlefaserverbundwerkstoff verstärkt. Es ist dabei sogar möglich, dass die Einzelteile, sprich die Module aus Teilen bestehen, die durch die Bearbeitung von Serienschaufeln entstanden sind. Alle Tragflügelgeometrien sind dabei insbesondere durch das gezielte Aufbringen des Kohlefaserverbundwerkstoffs CFK und ggf. einer entsprechenden spannenden Nachbearbeitung einstellbar. Alternativ kann dies auch mittels einer Form geschehen, die mit Trennwachs benetzt und unter Vakuum gesetzt wird. In allen Fällen lässt sich die neu hergestellte Tragflügelgeometrie mittels Schablonen kontrollieren und, sofern erforderlich, mittels lokalem Beschleifen korrigieren. Durch die Durchführung des Verfahrens unter Verwendung der angegebenen Verdichterleitschaufel kann die Verfügbarkeit des Verdichters und die Verfügbarkeit einer damit ausgestatteten Gasturbine kostengünstig erhöht werden.

## Patentansprüche

1. Verdichterleitschaufel (18) für einen Verdichter (10), insbesondere für einen Verdichter (10) einer stationären Gasturbine (12),
mit einer Schaufelhauptachse (20),
entlang derer ein Fußbereich (24) zum Montieren der Verdichterleitschaufel (18) in einem gehäuseseitigen Schaufelträger (28), ein daran angeordnetes Tragflügelprofil (31) mit einer Saugseitenwand (62) und einer Druckseitenwand (64) und ein Kopfbereich (34) vorgesehen sind,
**dadurch gekennzeichnet, dass**
die Verdichterleitschaufel (18) aus mindestens zwei Modulen (50, 52, 66, 68, 74, 76) zusammengesetzt ist.

2. Verdichterleitschaufel (18) nach Anspruch 1,
bei der ein erstes Modul (50) den Fußbereich (24) und einen Tragflügelteil (54) des Tragflügelprofils (31) und ein zweites Modul (52) einen weiteren Tragflügelteil (56) des Tragflügelprofils (31) und den Kopfbereich (34) umfasst.

3. Verdichterleitschaufel (18) nach Anspruch 1 oder 2,
bei der die mindestens zwei Module (50, 52) einen Verbindungsbereich (58) aufweisen, der sich im Wesentlichen entlang einer Profilmittenlinie (60) des Tragflügelprofils (31) erstreckt.

4. Verdichterleitschaufel (18) nach Anspruch 1, 2 oder 3,
bei der die Module (50, 52) formschlüssig miteinander verbindbar sind.

5. Verdichterleitschaufel (18) nach Anspruch 1, 2 oder 4,
bei der die mindestens zwei Module (50, 52) einen Verbindungsbereich (58) aufweisen, der sich im Wesentlichen schräg zur Schaufelhauptachse (20) erstreckt.

6. Verdichterleitschaufel (18) nach einem der vorangehenden Ansprüche,
bei der zur Einstellung der Höhe des Tragflügelprofils (31) in Richtung der Schaufelhauptachse (20) zwischen den beiden ersten Modulen (50, 52) ein oder mehrere Passstücke (66) als weitere Module einsetzbar sind.

7. Verdichterleitschaufel (18) nach Anspruch 1, 2 oder 5,
bei der die beiden Tragflügelteile (54, 56) der Module (50, 52) zumindest teilweise als Kernelemente (70, 72) ausgebildet sind, welche Kernelemente (70, 72) von mindestens zwei Schalenelementen (74, 76) umgeben sind, die das aerodynamisch wirksame Tragflügelprofil (31) zumindest teilweise bilden.

8. Verdichterleitschaufel (18) nach einem der vorangehenden Ansprüche,
bei der die Module (50, 52, 66) miteinander oder die Schalenelemente (74, 76) miteinander oder mit den Modulen (50, 52) mittels Epoxydharz verklebt sind.

9. Verdichterleitschaufel (18) nach einem der vorangehenden Ansprüche,
bei der die Module (50, 52, 66) im Bereich des Tragflügelprofils (31) oder die Schalenelemente (74, 76) von einer Bandage (68) als weiteres Modul zumindest teilweise umschlossen sind.

10. Verdichterleitschaufel (18) nach einem der vorangehenden Ansprüche,
bei der mindestens eines der Module (50, 52, 66), mindestens eines der Schalenelemente (74, 76), und/oder die Bandage (68) aus einem Kohlefaserverbundwerkstoff besteht.

11. Verdichterleitschaufel (18) nach einem der Ansprüche 1 bis 10,
bei der eines der Module (50, 52, 66) oder eines der Schalenelemente (74, 76), welches eine Anströmkante (59) und/oder einen Großteil der Druckseitenwand (64) des Tragflügelprofils (31) umfasst, aus Metall besteht.

12. Verdichterleitschaufel (18) nach einem der vorangehenden Ansprüche,
bei der der Fußbereich (24) und/oder der Kopfbereich (34) jeweils einen Zapfen (36, 37) umfasst, der in eine im gehäuseseitigen Schaufelträger (28) angeordnete Lagerbuchse (30) oder der in eine im rotorseitigen Befestigungsring (38) angeordnete Bohrung (40) einsteckbar ist.

13. Verdichterleitschaufel (18) nach Anspruch 12,
die um ihre Schaufelhauptachse (20) drehlagerbar und als Einlassleitschaufel ausgebildet ist.

14. Verfahren zum Wiederherstellen eines Verdichters (10),
bei dem eine auszutauschende Verdichterleitschaufel (18) oder die Lagerung einer Verdichterleitschaufel (18) bei ungeöffnetem Gehäuse (42) zu ersetzen ist,
**gekennzeichnet durch**
den Ablauf der folgenden Fertigungsschritte:
a) Zerteilen der betreffenden Verdichterleitschaufel (18) innerhalb des Verdichters (10),
b) Entnehmen der Teile der Verdichterleitschaufel (18) aus deren Lagerung,
c) die aufeinander folgende Montage von die Verdichterleitschaufel (18) bildenden Modulen (50, 52, 66, 74, 76) an der Position der entnommenen Verdichterleitschaufel (18),
d) das Verbinden der einzelnen Module (50, 52, 66, 74, 76) zu einer Verdichterleitschaufel (18).

15. Verfahren nach Anspruch 14,
bei dem zum Verbinden der Module (50, 52, 66, 74, 76) ein Klebeverfahren und/oder ein Schweißverfahren angewendet wird.

16. Verfahren nach einem der Ansprüche 14 oder 15,
bei dem die aerodynamische Kontur des Tragflügelprofils (31) nach Herstellung der Verdichterleitschaufel (18) kontrolliert und bei Bedarf, insbesondere mittels lokalem Schleifen, korrigiert wird.

17. Verfahren nach einem der Ansprüche 14 bis 16,
bei dem vor dem Montieren der Module (50, 52, 66, 74, 76) der Verdichterleitschaufel (18) in dem Verdichter die zur Lagerung der Verdichterleitschaufel (18) nötigen gehäuseseitigen und/oder rotorseitigen Bauteile (46), insbesondere die Lagerbuchsen ausgetauscht, nachgearbeitet oder deren Sitz nachgearbeitet werden.

18. Verfahren nach einem der Ansprüche 14 bis 17,
bei dem die aus Modulen (50, 52, 66, 68, 74, 76) zusammengesetzte Verdichterleitschaufel (18) bei der nächsten planmäßigen Zerlegung des Verdichters (10) durch eine einstückige Verdichterleitschaufel (18) ersetzt wird.

19. Verfahren nach einem der Ansprüche 14 bis 18,
bei dem eine Verdichterleitschaufel (18) nach einem der Ansprüche 1 bis 13 montiert wird.
